**Europäisches Patentamt**

**European Patent Office**

**Office européen des brevets**

(19)

(11) Veröffentlichungsnummer: **0 236 826**
**A2**

(12) ## EUROPÄISCHE PATENTANMELDUNG

(21) Anmeldenummer: **87102487.3**

(22) Anmeldetag: **21.02.87**

(51) Int. Cl.³: **H 02 P 5/402**
**H 02 M 5/451**

(30) Priorität: **07.03.86 DE 3607519**

(43) Veröffentlichungstag der Anmeldung:
**16.09.87 Patentblatt 87/38**

(84) Benannte Vertragsstaaten:
**CH DE GB IT LI**

(71) Anmelder: **BROWN, BOVERI & CIE Aktiengesellschaft**
**Kallstadter Strasse 1**
**D-6800 Mannheim 31(DE)**

(72) Erfinder: **Eichbaum, Robert**
**Oberlacher Strasse 22**
**D-6840 Lampertheim(DE)**

(74) Vertreter: **Rupprecht, Klaus, Dipl.-Ing. et al,**
**c/o BROWN, BOVERI & CIE AG Postfach 351**
**Zentralbereich Patente**
**D-6800 Mannheim 1(DE)**

(54) **Regelverfahren und Regelanordnung für einen Stromrichterantrieb mit Gleichspannungs-Zwischenkreis.**

(57) Regelverfahren und Regelanordnung für einen Stomrichterantrieb mit Gleichspannungs-Zwischenkreis. Das Regelverfahren für einen Stromrichterantrieb kann bevorzugt bei Beschleunigungsantrieben eingesetzt werden, bei denen die in die Beschleunigung des Antriebs investierte Energie größtenteils während des Bremsens wieder zurückgeliefert wird. Zur Abstützung der dynamischen Leistung des Antriebes wird die Zwischenkreisspannung nicht konstant gehalten, sondern in Abhängigkeit der erfaßten Drehzahl (n) des Motors (14) derartig geregelt, daß sie mit fallender Drehzahl steigt und umgekehrt. Hierdurch wird erreicht, daß die starken Energiependelungen lediglich zwischen dem Zwischenkreiskondensator (6, 7) und dem Motor (14) stattfinden, jedoch nicht zwischen Netz und Zwischenkreiskondensator. Es fließt ein nahezu konstanter Strom vom Netz zum Zwischenkreis (4), der lediglich die Verluste abdeckt. Es werden störende Netzrückwirkungen vermieden, ein günstiger Leistungsfaktor erzielt und die Netzanschlußleistung reduziert.

$$U_{Soll} = \sqrt{U_{max}^2 - k \cdot n^2}$$

EP 0 236 826 A2

BROWN, BOVERI & CIE    AKTIENGESELLSCHAFT
Mannheim                                  3. März 1986
Mp.-Nr. 512/86                            ZPT/P3-Pn/Bt

Regelverfahren und Regelanordnung für einen Stromrichterantrieb mit Gleichspannungs-Zwischenkreis

Die Erfindung bezieht sich auf ein Regelverfahren und eine Regelanordnung für einen Stromrichterantrieb mit Gleichspannungs-Zwischenkreis gemäß dem Oberbegriff des Anspruchs 1.

Ein solcher Stromrichterantrieb mit Gleichspannungs-Zwischenkreis ist beispielsweise aus K. Heumann, Handbuch Stromrichter, Springer-Verlag, Berlin-Heidelberg, 1978, Seite 126 bis 127 bekannt. Dort wird ein selbstgeführter Wechselrichter einstellbarer Frequenz am Zwischenkreis betrieben. Die abgegebene Wechselspannung ist proportional der Gleichspannung des Zwischenkreises. Die Steuerung der abgegebenen Wechselspannung kann entweder auf der Gleichspannungsseite, im Wechselrichter selbst oder auf der Wechselspannungsseite vorgenommen werden.

Bei Beschleunigungsantrieben, wie z.B. Antriebe für rotierende Scheren, wird die in die Beschleunigung investierte Energie zum größten Teil während des Bremsvorganges wieder zurückgeliefert. Für derartige Anwendungen werden eingangsseitig vorwiegend netzgeführte Vierquadranten-Stromrichter eingesetzt. Mit diesem Antriebskonzept können die hohen Anforderungen an Dynamik und Schnittgenauigkeit erfüllt werden. Nachteilig ist jedoch die erforderliche hohe Netzanschlußleistung mit entsprechend großer Auslegung der einzelnen Baueinheiten. Desweiteren sind der ungünstige Leistungsfaktor und störende Netzrückwirkungen von Nachteil.

Der Erfindung liegt davon ausgehend die Aufgabe zugrunde, ein Regelverfahren für einen Stromrichterantrieb mit Gleichspannungs-Zwischenkreis der eingangs genannten Art anzugeben, mit dessen Hilfe störende Netzrückwirkungen vermieden, ein günstiger Leistungsfaktor erzielt und die Netzanschlußleistung reduziert werden. Desweiteren soll eine Regelanordnung zur Durchführung des Regelverfahrens angegeben werden.

Diese Aufgabe wird in Verbindung mit den Merkmalen des Oberbegriffes erfindungsgemäß durch die im Kennzeichen des Anspruchs 1 angegebenen Merkmale gelöst.

Die Aufgabe wird bezüglich der Regelanordnung durch die im Anspruch 5 gekennzeichneten Merkmale gelöst.

Die mit der Erfindung erzielbaren Vorteile bestehen insbesondere darin, daß der Zwischenkreis zur Abstützung der dynamischen Leistung des Antriebes herangezogen wird. Dementsprechend wird die Zwischenkreisspannung nicht einfach konstant gehalten, sondern nach der angegebenen Bedingung in Abhängigkeit der Drehzahl des Motors geführt. Hierdurch wird erreicht, daß ein nahezu konstanter Strom vom Netz zum Zwischenkreis fließt, welcher eben die Verluste abdeckt.

Die durch den Beschleunigungsantrieb verursachten star 0236826 ken Energieschwankungen werden durch den Zwischenkreiskondensator "gepuffert" und treten nur noch zwischen dem Kondensator und dem Antrieb, jedoch nicht mehr zwischen dem Netz und dem Antrieb auf. Deshalb kann die Netzanschlußleistung stark reduziert werden und muß nur noch auf die Ladeleistung für den Zwischenkreiskondensator abgestimmt sein. Da der eingangsseitige Gleichrichter keine starken Leistungspendelungen mehr verarbeiten muß, werden die Netzrückwirkungen verkleinert. Gleichzeitig wird der Leistungsfaktor verbessert.

Vorteilhafte Ausgestaltungen der Erfindung sind in den Unteransprüchen gekennzeichnet.

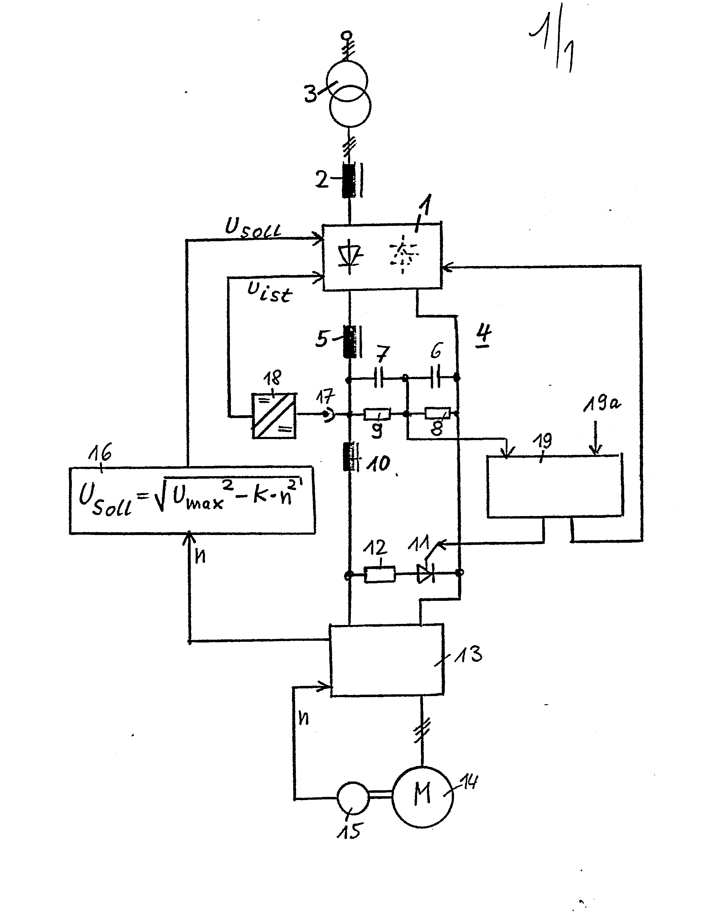

Die Erfindung wird nachstehend anhand des in der Zeichnung dargestellten Ausführungsbeispiels erläutert.

In der Figur ist ein netzgeführter Gleichrichter 1 zu erkennen. Der Gleichrichter 1 ist eingangsseitig über eine Drossel 2 und einen Transformator 3 an ein Drehspannungsnetz angeschlossen. Ausgangsseitig speist der Gleichrichter 1 einen Gleichspannungs-Zwischenkreis 4. Der Zwischenkreis 4 weist eine erste Glättungsdrossel 5, zwei in Reihe zwischen den Zwischenkreis-Leitungen liegende Zwischenkreiskondensatoren 6 und 7, zwei in Reihe geschaltete und parallel zu den Kondensatoren 6 und 7 angeordnete Symmetrierwiderstände 8 und 9, eine zweite Glättungsdrossel 10 sowie einen zwischen den Zwischenkreis-Leitungen liegenden Entladethyristor 11 mit in Reihe geschaltetem Entladewiderstand 12 auf.

Der Gleichspannungs-Zwischenkreis 4 ist ausgangsseitig mit einem Wechselrichter oder einem Gleichstromsteller 13 (Vierquadranten-Gleichstromsteller) verbunden. Der Wechselrichter oder Gleichrichstromsteller 13 versorgt

**0236826**

einen z.B. zum Antrieb einer rotierenden Schere dienenden Motor 14. Der Drehzahl-Istwert n des Motors wird mittels einer Drehzahlerfassungseinrichtung 15 gemessen und der Steuer- und Regeleinrichtung des Wechselrichters oder Gleichstromstellers 13 sowie einem Funktionsgeber 16 zugeführt. Der Funktionsgeber 16 gibt ausgangsseitig einen Sollwert der Zwischenkreisspannung $U_{soll}$ in Abhängigkeit der Drehzahl n an die Steuer- und Regeleinrichtung des Gleichrichters 1 ab, und zwar gemäß folgender Vorschrift:

$$U_{soll} = \sqrt{U_{max}^2 - k \cdot n^2}$$

wobei $U_{max}$ die vorgebbare maximale Zwischenkreisspannung und k einen konstanten Faktor darstellen.

Der Istwert der Zwischenkreisspannung $U_{ist}$ wird mit Hilfe einer Spannungserfassungseinrichtung 17 gemessen und über ein Potentialtrennungsglied 18 an die Steuer- und Regeleinrichtung des Gleichrichters 1 geleitet.

Zur Überwachung der Spannungs-Symmetrie an den Kondensatoren 6 und 7 ist eine Überwachungseinrichtung 19 vorgesehen, die eingangsseitig an die gemeinsamen Verbindungspunkte der Kondensatoren 6 und 7 sowie der Symmetrierwiderstände 8 und 9 angeschlossen ist. Ausgangsseitig steuert die Überwachungseinrichtung 19 den Entladethyristor 11 an. Desweiteren ist die Überwachungseinrichtung 19 ausgangsseitig mit der Steuer- und Regeleinrichtung des Gleichrichters 1 verbunden.

Nachfolgend wird die Funktionsweise der erfindungsgemäßen Anordnung beschrieben. Der eingesetzte Motor 14 dient zum Antrieb einer rotierenden Schere, einer mitlaufenden Schere, eines Sägewagens, eines Querschneiders oder eines Scherenvorschubes und fährt betriebsmäßig z.B. bis

**0236826**

zu acht Hüben pro Sekunde. Derartige Antriebe sind Beschleunigungsantriebe, bei denen 80...90% der in die Beschleunigung investierten Energie während des Bremsvorganges wieder zurückgeliefert wird. Um eine hohe Netzanschlußleistung mit entsprechend großer Auslegung des Transformators 3 und der Zuleitungen zu vermeiden, werden die verhältnismäßig großen Zwischenkreiskondensatoren 6 und 7 eingesetzt. Diese Kondensatoren dienen zur Abstützung der dynamischen Leistung des Antriebes, während lediglich die Nachladung der Verlustleistung über den netzgeführten Gleichrichter mit einem annähernd konstanten Strom erfolgt.

Zur Berechnung der erforderlichen Speicherkapazität des Zwischenkreises können die in der rotierenden Masse des Motors 14 gespeicherte Rotationsenergie $E_{rot}$ und die in den Kondensatoren 6, 7 maximal speicherbare elektrische Energie $E_{el}$ gleichgesetzt werden. Die Rotationsenergie $E_{rot}$ ist dabei proportional zu der dem Motor 14 zugeführten elektrischen Leistung $P_{el}$ und der Beschleunigungszeit $t_b$ des Motors bis zur vorgegebenen Drehzahl, wobei der Wirkungsgrad $\eta$ des Motors zu berücksichtigen ist. Die Beschleunigungszeit $t_b$ ist proportional zum Massenträgheitsmoment $I_S$ von Motor und Messerbalken (bzw. weiterer sich bewegender Antriebsteile) sowie proportional zur Drehzahl n des Motors und umgekehrt proportional zum Drehmoment M des Motors. Das Drehmoment M ist proportional zur elektrischen Leistung $P_{el}$ und umgekehrt proportional zur Drehzahl n.

Die in den Kondensatoren 6, 7 maximal speicherbare elektrische Energie $E_{el}$ ist proportional zur gesamten Kapazität C der Kondensatoren 6, 7 und proportional zur Differenz zwischen der quadrierten maximalen und der quadrierten minimalen Zwischenkreisspannung $U_{max}^2 - U_{min}^2$.

0236826

Durch Gleichsetzen der Rotationsenergie $E_{rot}$ und der maximal speicherbaren elektrischen Energie $E_{el}$ ergibt sich, daß die Kapazität C der Kondensatoren 6, 7 proportional zum Massenträgheitsmoment $I_S$ und zum Quadrat der Drehzahl n und umgekehrt proportional zur Differenz $U_{max}^2 - U_{min}^2$ ausgelegt werden muß, wobei der Wirkungsgrad $\eta$ zu berücksichtigen ist.

Um einen Ladestrom für die Kondensatoren 6, 7 zu erzielen, der zu jedem Zeitpunkt und bei jeder Drehzahl n lediglich die Verluste abdeckt, ist der Sollwert der Zwischenkreisspannung $U_{soll}$ als Funktion der Drehzahl n auszudrücken. Die bei einer bestimmten Drehzahl n in den Kondensatoren zu speichernde momentane elektrische Energie ist proportional zur Kapazität C der Kondensatoren und zur Differenz zwischen der quadrierten Spannung $U_{soll}^2$ und der quadrierten minimalen Spannung $U_{min}^2$. Bei Addition dieser momentanen elektrischen Energie mit der momentanen, bei der gleichen Drehzahl n vorhandenen Rotationsenergie $E_{rot}$ (n) ergibt sich die maximale, in den Kondensatoren 6, 7 speicherbare elektrische Energie $E_{el}$. Hieraus läßt sich der Sollwert der Zwischenkreisspannung $U_{soll}$ bestimmen zu:

$$U_{soll} = \sqrt{U_{max}^2 - k \cdot n^2},$$

wobei der konstante Faktor k proportional zum Massenträgheitsmoment $I_S$ und zum Wirkungsgrad $\eta$ und umgekehrt proportional zur Kapazität C der Kondensatoren ist. Wenn man als Sonderfall den Betrieb mit maximaler Drehzahl $n = n_{max}$ betrachtet und beachtet, daß bei maximaler Drehzahl der Sollwert der Zwischenkreisspannung $U_{soll}$ gleich der minimalen Zwischenkreisspannung $U_{min}$ sein muß, so ergibt sich, daß der konstante Faktor k proportional zur Differenz zwischen der quadrierten maximalen und der quadrierten minimalen Zwischenkreis-

0236826

spannung $U_{max}^2 - U_{min}^2$ sowie umgekehrt proportional zum Quadrat der maximalen Drehzahl $n_{max}^2$ ist.

Anstelle der beiden in Serie geschalteten Kondensatoren 6, 7 kann auch ein einziger Kondensator mit entsprechender Kapazität eingesetzt werden. Vielfach ist es jedoch aus Gründen der Spannungsfestigkeit notwendig, zwei Kondensatoren in Reihe zu schalten, wobei zur Erhöhung der Kapazität jedem dieser beiden Kondensatoren zusätzlich weitere Kondensatoren parallel liegen. Bei einer derartigen Kondensator-Anordnung ist die Spannungs-Symmetrie mit Hilfe der Überwachungseinrichtung 19 zu kontrollieren. Bei Ausfall eines einzigen Kondensators der gesamten Anordnung ergeben sich durch Leckströme unterschiedliche Spannungen über den Kondensatoren bzw. Symmetrierwiderständen 8, 9, was zum Ansprechen der Einrichtung 19 führt. Die Einrichtung 19 zündet daraufhin den Thyristor 11, um den Zwischenkreis 4 über den niederohmigen Widerstand 12 schnell zu entladen. Gleichzeitig wird ein Signal an die Steuer- und Regeleinrichtung des Gleichrichters 1 abgegeben.

Vor dem Start des Antriebs werden die Kondensatoren 6, 7 geführt aufgeladen. Hierzu gibt die Steuer- und Regeleinrichtung des Gleichrichters 1 einen bestimmten Stromwert vor und begrenzt den nach Start fließenden Strom auf diesen maximalen Wert. Da die Drehzahl n des Antriebs den Wert Null aufweist, gibt der Funktionsgeber 16 einen Sollwert der Zwischenkreisspannung $U_{soll} = U_{max}$ vor. Nach Erreichen der maximalen Zwischenkreisspannung $U_{max}$ kann der Wechselrichter oder Gleichstromsteller 13 nach Ablauf einer vorgebbaren Verzögerungszeit erstmalig eingeschaltet werden. Durch die Verzögerungszeit soll sichergestellt werden, daß alle Kondensatoren der Anordnung vollständig geladen sind. Anschließend erfolgt die beschriebene Spannungsführung während des Betriebes zur

**0236826**

Erzielung eines annähernd konstanten Stromes vom Gleichrichter 1 in den Zwischenkreis.

Nach dem Abschalten des Wechselrichters oder Gleichstromstellers 13 nach Stillstand des Motors 14 müssen
die Kondensatoren 6, 7 geführt entladen werden. Zur Entladung kann vorteilhaft die Überwachungseinrichtung 19
eingesetzt werden. Die Überwachungseinrichtung 19 wird
über einen zusätzlichen Eingang 19a aktiviert und zündet
den Entladethyristor 11. Hierdurch wird die Energie des
Zwischenkreises über den Widerstand 12 entladen.

Eine weitere Möglichkeit zur Entladung des Zwischenkreises nach Abschalten des Wechselrichters oder Gleichstromstellers 13 ist gegeben, wenn der netzgeführte
Gleichrichter 1 als Umkehrstromrichter ausgebildet ist.
Die erste Stromrichtung wird dann zum Laden der Kondensatoren und zum Betrieb des Stromrichterantriebs verwendet, während die zweite Stromrichtung lediglich zum Entladen des Zwischenkreises dient.

<u>A n s p r ü c h e</u>

1. Regelverfahren für einen Stromrichterantrieb mit einem netzgeführten Gleichrichter, einem Gleichspannungs-Zwischenkreis mit Zwischenkreiskondensator und einem Wechselrichter bzw. Gleichstromsteller zum Antrieb eines Motors, wobei die Spannung im Gleichspannungs-Zwischenkreis mit Hilfe des Gleichrichters gestellt wird, <u>dadurch gekennzeichnet,</u> daß die Zwischenkreisspannung in Abhängigkeit von der Drehzahl des Motors derartig geregelt wird, daß sie mit fallender Drehzahl steigt und umgekehrt.

2. Regelverfahren nach Anspruch 1, dadurch gekennzeichnet, daß der Sollwert ($U_{soll}$) der Zwischenkreisspannung nach der Beziehung

$$U_{soll} = \sqrt{U_{max}^2 - k \cdot n^2}$$

vorgegeben wird, wobei $U_{max}$ die maximale Zwischenkreisspannung, n die Drehzahl des Motors und k einen konstanten Faktor darstellen.

3. Regelverfahren nach Anspruch 2, gekennzeichnet durch einen konstanten Faktor k, der proportional zum Massenträgheitsmoment und zum Wirkungsgrad des Antriebes und umgekehrt proportional zur Kapazität des Zwischenkreiskondensators ist.

**0236826**

4. Regelverfahren nach einem der Ansprüche 1 bis 3, dadurch gekennzeichnet, daß der Zwischenkreiskondensator (6,7) vor dem Start des Antriebes mit begrenztem Strom über den Gleichrichter aufgeladen wird.

5. Regelanordnung zur Durchführung des Regelverfahrens nach Anspruchs 1, dadurch gekennzeichnet, daß ein Funktionsgeber (16) vorgesehen ist, der eingangsseitig die Drehzahl (n) des Motors empfängt und ausgangsseitig den Sollwert ($U_{soll}$) der Zwischenkreisspannung an die Steuer- und Regeleinrichtung des netzgeführten Gleichrichters abgibt.

6. Regelanordnung nach Anspruch 5, dadurch gekennzeichnet, daß bei Serienschaltung von zwei Zwischenkreiskondensatoren (6,7) eine Überwachungseinrichtung (19) vorgesehen ist, die bei unsymmetrischer Spannungsverteilung an den Kondensatoren (6,7) eine Entladung der Kondensatoren über einen Entladethyristor (11) und einen Entladewiderstand (12) einleitet.

7. Regelanordnung nach Anspruch 6, dadurch gekennzeichnet, daß nach dem Abschalten des Antriebs eine Entladung der Zwischenkreiskondensatoren (6,7) mit Hilfe der Überwachungseinrichtung (19), dem Entladethyristor (11) und dem Entladewiderstand (12) erfolgt.